# EUROPÄISCHE PATENTSCHRIFT

(11) **EP 1 743 173 B1**
(45) Veröffentlichungstag und Bekanntmachung des Hinweises auf die Patenterteilung: **08.03.2017**
(21) Anmeldenummer: 05740717.3
(22) Anmeldetag: 05.04.2005
(51) Int. Cl.: G01N 27/327, B01L 7/00

(54) **ANALYSE-ARRAY MIT HEIZBAREN ELEKTRODEN**
ANALYSIS ARRAY COMPRISING HEATABLE ELECTRODES
JEU ORDONNE D'ECHANTILLONS POUR ANALYSE MUNI D'ELECTRODES CHAUFFANTES

(30) Priorität: 06.04.2004 DE 102004017750
(43) Veröffentlichungstag der Anmeldung: 17.01.2007
(73) Patentinhaber: Flechsig, Gerd-Uwe, 17166 Teterow (DE)
(72) Erfinder: FLECHSIG, Gerd-Uwe, 17166 Teterow (DE); GRÜNDLER, Peter, D-01069 Dresden (DE); WANG, Joseph, Tempe, AZ 85287 (US)
(74) Vertreter: Göbel, Claus
(86) Internationale Anmeldenummer: PCT/DE2005/000643
(87) Internationale Veröffentlichungsnummer: WO 2005/098438

(56) Entgegenhaltungen:
- EP-A- 0 164 473
- EP-A- 0 795 747
- EP-A- 1 108 472
- DE-A1- 19 960 398
- O. KORBUT ET AL: "Voltammetric Detection of Antioxidative Properties of Flavonoids Using Electrically Heated DNA Modified Carbon Paste Electrodes" SENSORS, Bd. 3, 24. Januar 2003 (2003-01-24), Seiten 1-10, XP002337955
- G. WILDGOOSE ET AL: "High-Temperature Electrochemistry: A Review" ELECTROANALYSIS, Bd. 16, Nr. 6, 26. Februar 2004 (2004-02-26), Seiten 421-433, XP002337956

## Beschreibung

Die Erfindung betrifft ein Analyse-Array mit den Merkmalen des Oberbegriffs des Anspruches 1.

Es ist bekannt, dass in der chemischen und biochemischen Analytik oftmals mehrere analytische Spezies (Targetmoleküle, Analytmoleküle) in einer Probe bestimmt werden müssen. So lassen sich z.B. pH-Messungen und die Bestimmung verschiedener Ionen mit Hilfe von Arrays realisieren, die mit unterschiedlichen ionensensitiven Elektroden bestückt sind.

In der Genetik stellt sich beispielsweise das Problem, eine lange Nukleinsäuresequenz aufzuklären oder mehrere unterschiedliche Nukleinsäuresequenzen in einer Probe wieder zu finden. Dieses lässt sich mit Hilfe von so genannten DNA-Chips bewerkstelligen, wobei verschiedene Nukleinsäuremoleküle als Sonden-Moleküle auf jeweils eigenen Array-Elementen immobilisiert sind und der molekularen Erkennung der Target-Moleküle dienen. So ist es möglich, viele verschiedene Teilsequenzen einer natürlichen Nukleinsäure simultan zu bestimmen.

Dabei werden verschiedene Wege zur Detektierung des molekularen Erkennungsereignisses beschritten. Mehrheitlich werden fluorimetrische Verfahren, aber auch vereinzelt elektrochemische Methoden angewandt.

Bekannt ist nach der DE-OS 199 40 647 A1, dass durch Anlegen einer Wechselspannung zwischen Arbeits- und Referenz- bzw. Gegenelektrode erreicht wird, dass nicht komplementäre Sequenzen sich von den Sonden-Oligos abstoßen.

Die elektrische Leitfähigkeit intakter DNA-Doppelstränge wird dagegen nach DE-OS 199 21 940 A1 genutzt, da bei Vorhandensein von Basenfehlpaarungen sich die Leitfähigkeit verringert.

Zum Stand der Technik gehört auch, elektrisch heizbare Elektroden einzusetzen, die mit Nukleinsäuremolekülen modifiziert sind. Damit ist es möglich alle Schritte der Hybridisierung und Detektierung bei der jeweils eigenen Temperatur durchzuführen bzw. zu messen, wie in der DE-OS 199 60 398 A1 beschrieben.

Aus der US 6,255,677 B1 ist ein Analysenchip zur Analyse von chemischen und biologischen Produkten bekannt, auf dem individuell erwärmbare Elektroden angeordnet sind, die lokal erhitzt werden können. Die Elektroden mit ihren Reaktionsflächen besitzen die Form quadratischer Spiralen und können direkt beheizt werden. Der Querschnitt der Spirale ist über die gesamte Länge gleich bleibend.

Meistens erfolgt die Erwärmung der Elektroden indirekt durch eine Laserquelle mit speziell angeordneten Linsensystemen oder durch zusätzlich angeordnete Heizdrähte in der Nähe der Elektroden.

In der EP 064 473 B1 wird eine Elektrodenanordnung beschrieben für einen Aggregometer. Die Elektroden weisen eine inverse L-Form auf, wobei die unteren Enden der Elektroden an dieser Stelle mit einem isolierenden Material bedeckt sind. Jedoch die unten freiragenden Kanten zu elektrisch aktiven Bereichen werden, die in das Medium eintauchen. Ziel ist es hier einen elektrisch leitfähigen Bereich zu erreichen für die exakte Messung von Thrombozyten. Es wird hier auf die Temperaturverteilung innerhalb der Elektrode kein Einfluss genommen.

Eine Anordnung einer Heizung für einen chemischen Halbleitersensor wird in der EP 0 795 747 B1 beschrieben. Ziel ist es mit der angeordneten Heizung um den Heizungsbereich zu erwärmen. Nachteilig ist auch hier, dass eine gleichmäßige Temperatur über Oberfläche des Halbleitersensors nicht erreicht wird.

Nachteilig an den bekannten heizbaren Elektroden und Arrays bzw. Analysenchips bestehend aus individuell heizbaren Elektroden ist, dass die Temperatur der Elektrodenoberfläche bzw. die Temperatur der Reaktionsflächen der Elektroden auf dem Array nicht einheitlich auf der gesamten Elektrodenoberfläche ist. Es bilden sich unerwünschte Temperaturgradienten auf der Elektrodenoberfläche aus. Die Ursache dafür liegt in der Wärmeableitung durch die Heizstromzuführungen mit großer Querschnittsfläche. Diese großen Querschnittsflächen sind nötig, weil sich sonst nicht die zu heizende Elektrode, sondern die Stromzuführungen erwärmen würden.

Die Folge ist ein Temperaturabfall an den Elektroden in Richtung beider Heizstromkontaktstellen. Dadurch bedingt kommt es häufig bei der Hybridisierung von Nukleinsäuren ungewollt zu positiven Detektierungen, obwohl Target- und Sondenstrang nicht hundertprozentig komplementär zueinander sind.

Eine Ursache ist, dass fehlerhafte Doppelstränge noch eine gewisse Stabilität aufweisen. Die "Schmelztemperatur" Tₘ, d.h. die Temperatur bei der sich die beiden Stränge einer doppelsträngigen Nukleinsäure voneinander trennen, ist jedoch um ca. 5 K pro Basenfehlpaarung verringert, verglichen mit der fehlerfreien doppelsträngigen Nukleinsäure. Dies lässt sich zur Erkennung von Basenfehlpaarungen ausnutzen, setzt jedoch eine präzise Einstellung der Temperatur auf der gesamten Elektrodenoberfläche voraus. Je länger ein Doppelstrang ist, desto höher liegt seine Schmelztemperatur. Ist die Sonde kurz genug, dann liegt Tₘ nur wenige Grad über Raumtemperatur. Tritt dabei eine Fehlpaarung auf, so ist der entsprechende fehlerhafte Doppelstrang also bereits bei Raumtemperatur instabil.

Die in der DE-OS 199 40 647 A1 beschriebene Bestimmungsmethode durch Anlegen einer Spannung/eines elektrischen Stromes an die Arbeitselektrode hat den Nachteil, dass es zu unerwünschten Redox-Nebenreaktionen mit Bestandteilen der Probenmatrix oder sogar des Analyten selbst kommen kann. Je nach Länge und Guanidin/Cytosin-Gehalt der Sondenfrequenz sind stark unterschiedliche Ströme bei der Diskriminierung von Basenfehlpaarungen erforderlich.

Die Ausnutzung der Leitfähigkeit doppelsträngiger DNA, wie in der DE-OS 199 21 940 A1 beschrieben, weist ebenfalls Nachteile auf. So ist der diskriminierende Effekt zwischen voll komplementärem Strang (Target) und fehlerhaftem Strang bei gewissen Basenpaarungen stark verringert bzw. kaum vorhanden (Thymin-Thymin, Thymin-Cytosin).

Durch Anwendung von Arrays mit heizbaren Arbeitselektroden z.B. von Nukleinsäure-modifizierten Elektroden, wie in der DE-OS 199 60 398 A1 oder US 6,255,677 B1 beschrieben, wird zwar mit der Temperatur ein weiter veränderlicher Parameter eingeführt, der die Schritte der Hybridisierung optimieren und beschleunigen, sowie eine Regenerierung der Sondenmoleküle ermöglichen soll. Nachteilig ist jedoch, dass an einer Elektrode nur jeweils eine analytische Spezies bestimmt werden kann bzw. die Temperatur über die gesamte Reaktionsfläche der einzelnen Elektrode nicht einheitlich ist.

Problematisch sind außerdem störende Faktoren, die die vorgegebene Elektrodentemperatur beeinflussen. So muss beispielsweise eine schwankende Umgebungstemperatur oder eine wechselnde Temperatur der zugeführten Probelösung ausgeglichen werden. Werden diese Störfaktoren nicht kompensiert, so ist keine exakte Einstellung der benötigten Elektrodentemperaturen möglich.

Nachteilig ist auch, dass bei gleichzeitiger Messung und elektrischer Heizung die einzelnen geheizten Elektroden des Arrays voneinander galvanisch getrennt sein müssen, weil ansonsten keine individuellen elektrochemischen Messungen möglich sind.

Ein weiterer Nachteil beim Arbeiten mit geheizten Elektroden ist häufig die erhebliche Aufheizung der Probelösung. Insbesondere bei sehr kleinen Probevolumina, wie sie typischerweise bei biochemischen Analysen auftreten, kann schon ein kurzzeitiger Betrieb von geheizten Elektroden zu einer Erwärmung der Analysenlösung um mehrere Kelvin führen. Dies erschwert die Einstellung der gewünschten Elektrodentemperatur, verringert den nützlichen Mikrorühreffekt und hat eine unerwünschte thermische Belastung der ganzen Probelösung zur Folge.

Aufgabe der Erfindung ist es daher, ein Analyse-Array mit selektiv heizbaren Elektroden für die chemische und biochemische Analytik zu schaffen,
a) dessen einzelne Elektrodenoberflächen auf eine jeweils eigene Temperatur gebracht werden können, die auf der ganzen Elektrodenoberfläche den gleichen Wert hat, und
b) bei dem simultan elektrische Heizung und elektrochemische Messungen möglich sind, ohne dass sich die einzelnen Elektroden gegenseitig stören und
c) das nicht zu einer unerwünschten Erwärmung der Probelösung führt.

Gelöst wird diese Aufgabe durch die kennzeichnenden Merkmale des Anspruchs 1. Weitere vorteilhafte Ausgestaltungen ergeben sich aus den Unteransprüchen.

Erfindungsgemäß ist demnach vorgesehen, dass die Elektroden des Arrays bevorzugt aus einer Anordnung von elektrisch leitfähigen schichtförmigen Elementen beliebiger Dicke, insbesondere aus Kohlenstoff, Platin, Palladium, Gold, Iridium, Bismut, Cadmium, Nickel, Zink, Silber, Kupfer, Eisen, Blei, Aluminium, Mangan, Quecksilber oder deren Legierungen bestehen, die vorteilhafterweise durch Sputtern oder Aufdampfen auf ein elektrisch nicht leitendes Trägermaterial, wie z. B. Glas und glasähnlichen Substanzen, Keramik, verschiedene Arten von Polymeren usw. als planare Träger hergestellt werden.

Jede einzelne Elektrode auf dem Träger besitzt an jedem Ende einen elektrischen Heizstromkontakt für Stromzuführungen und kann elektrisch erwärmt werden.

Ein besonderer Vorteil ist, dass diese Heizstromkontakte mit den Stromzuführungen auch zum Anschluss elektrochemischer sowie elektrischer Messinstrumente, beispielsweise Potentiostaten, Galvanostaten, Amperemeter oder Voltmeter genutzt werden. Die Heizstromkontakte und die elektrischen Stromzuführungen sind möglichst mit geeignetem Material, wie Gläsern, Lacken oder polymeren Kunststoffen, zur elektrischen Isolation beschichtet, um hier den Kontakt mit dem Elektrolyten (der Probelösung) zu verhindern.

Erfindungsgemäß ist die Anordnung der schichtförmigen leitfähigen Elemente nicht auf Sputtern oder Aufdampfen begrenzt, sondern es hat sich gezeigt, dass die Elektroden auf dem Träger auch galvanisch oder durch entsprechende Anordnung von dünnen Metalldrähten, -bändern u. ä. herzustellen sind. Heizbare Kohleelektroden lassen sich insbesondere in Form von gedruckten Schichten, als Pasten aus Kohlepulver oder als Glaskohle in Form von Schichten und Stäben realisieren.

Erfindungsgemäß wird bei den einzelnen Elektroden die Querschnittsfläche quer zur Längsachse der Elektrode über deren Länge so variiert, dass der Querschnitt der Elektrode in der Nähe der Heizstromkontakte, die einen großen Wärmeverlust bewirken, kleiner ist.

Auf Grund des örtlich geringeren Querschnitts in der Nähe der Heizstromkontakte wird dieser Teil der Elektrode beim Anlegen des gleichen Heizstromes stärker aufgeheizt. Wegen der größeren Wärmeabfuhr über die Heizstromkontakte mit den angeschlossenen elektrischen Stromzuführungen wird diese stärkere Aufheizung jedoch gerade kompensiert.

Erfindungsgemäß ist es dadurch möglich, die gleiche Temperatur auf der gesamten Elektrodenoberfläche zu erreichen.

Es hat sich dabei gezeigt, dass es besonders vorteilhaft ist, wenn die Elektrodenoberfläche als Reaktionsfläche der Elektrode eine lang gestreckte jedoch annähernd ovale Form aufweist, wobei die Heizstromkontakte mit den angeschlossen elektrischen Stromzuführungen an den schmalen Enden der Elektroden angeordnet sind. Eine gleichmäßige Verringerung der Querschnittsfläche in Richtung der Heizstromkontakte ist auch möglich.

So hat es sich gezeigt, dass das Verhältnis des kleinsten Querschnittes der Elektrode an den Heizstromkontakten zum größten Querschnitt der Elektrode von eins zu eins bis eins zu drei sein kann. Als besonders vorteilhaft hat sich ein Verhältnis von eins bis zu zwei erwiesen.

Erfindungsgemäß ist das Verhältnis aber nicht darauf begrenzt, denn es ist immer von verschiedenen Einflussfaktoren abhängig. Einmal davon, wie groß der Abfluss der Wärme über die Stromzuführungen an den Heizstromkontakten ist, aber auch davon, wie hoch die Differenz zwischen Elektrodentemperatur und Umgebungstemperatur ist. Entsprechend den Einsatzbedingungen wird die Elektrodenform optimal gestaltet.

Durch die erfindungsgemäße Geometrie der Elektrode ist es möglich, an der gesamten Elektrodenoberfläche der einzelnen Elektroden des Arrays eine gleichmäßige Temperatur zu erhalten. Diese gleichmäßige Temperatur ist beispielsweise besonders erforderlich für die exakte Sequenzbestimmung bei Nukleinsäuren, die bei relativ kurzen Nukleinsäureketten eine genaue Temperatureinstellung der Elektrodenoberfläche erfordert. Nur dadurch ist die exakte Bestimmung des zu untersuchenden chemischen oder biochemischen Materials möglich. Fehler bei der Bestimmung z.B. von Nukleinsäuresequenzen können also nun ausgeschlossen werden, wo bisher schon geringe Ungenauigkeiten bei der Temperatureinstellung oder Temperaturgradienten auf der Elektrodenoberfläche gerade bei relativ kurzen Sequenzen häufig zu Fehldetektionen führten.

Erfindungsgemäß ist es aber auch möglich, den Endbereich der Elektrodenoberflächen an den Heizstromkontakten mit einer thermisch und elektrisch isolierenden Schicht zusätzlich abzudecken, damit der Wärmeverlust in der Nähe der Heizstromkontakte reduziert wird, so dass in axialer Richtung kein oder nur ein geringer Wärmeverlust auftritt. Diese Abdeckung kann sowohl begrenzt sein auf die reine Umgebung des Heizstromkontaktes als auch auf einen erweiterten Abschnitt der Elektrodenoberfläche. Auch eine Kombination beider ist möglich. Bei einem teilweise Abdecken der Elektrode an den Enden der Heizstromkontakte ist eine geringere oder sogar keine Veränderung der Querschnittsfläche längs der Elektrode erforderlich, jedoch ist die Größe der Reaktionsfläche auf der einzelnen Elektrode dadurch etwas eingeschränkt.

Es besteht aber auch die Möglichkeit, die Länge der Elektrode extrem großzügig zu bemessen, so dass die so genannten "kalten" Endbereiche in der Nähe der Kontaktstellen nur einen sehr kleinen Bruchteil im Verhältnis zur Gesamtelektrode ausmachen. In diesem extremen Fall kann die Temperaturabweichung an den Enden vernachlässigt werden.

Erfindungsgemäß ist es auch möglich einen dritten Kontakt an der Elektrode anzuordnen. Dieser Kontakt, der so genannte mittlere (der dritte) Kontakt bei der symmetrischen Kontaktierung zwecks Anschluss eines elektrochemischen Messgerätes ist immer so klein zu halten, dass der Wärmeverlust an dieser Stelle möglichst vernachlässigbar gering ist. Dies ist ohne weiteres möglich, da die zu messenden elektrochemischen Ströme um ca. 6 Größenordnungen kleiner als der Heizstrom sind.

Die Stromzuführungen an den einzelnen Elektroden des Arrays können auf unterschiedliche Art und Weise realisiert sein. In einer Ausführungsform sind die Stromzuführungen nach der Elektrode von unten durch den Träger geführt. Es besteht aber auch die Möglichkeit, die Stromzuführungen in der gleichen Ebene wie die Elektrode an den Rand des Arrays zu führen. Beide Varianten, auch in der gekoppelten Form, sind möglich und sollen die Erfindung nicht einschränken.

Der Spannungsabfall des Heizstromes über jeder einzelnen Elektrode mit der erfindungsgemäßen Form der Elektrodenoberfläche wird gemessen. Zusammen mit dem Wert des Heizstromes, der durch diese Elektrode fließt, wird der Widerstand berechnet nach der Formel R = U/I. Über die Beziehung R = R₀(1+αT) (mit dem Widerstandsbezugswert R₀ und dem Temperaturkoeffizienten α des elektrischen Widerstandes) ist der gemessene Widerstand ein Maß für die Elektrodentemperatur.

Der so ermittelte Widerstand wird an Stelle der Elektrodentemperatur für jede Elektrode individuell durch Anpassung des jeweiligen Heizstromes geregelt (Multi-Kanal-Methode). Dadurch werden thermische Störeinflüsse, die auf jede Elektrode auch individuell etwas verschieden einwirken können, kompensiert. Bevorzugt wird die Messstrecke zur Vermeidung von Interferenzen über einen Optokoppler mit der Regelstrecke verbunden.

Die gemeinsame Stromversorgung kann z.B. über einen Transformator als Stromquelle erfolgen. Der Stromfluss an den einzelnen Elektroden wird durch vorgeschaltete und nachgeschaltete Mehrfachdoppelschalter zum Zeitpunkt der elektrochemischen Messung unterbrochen. Die an den Elektroden anliegende Spannung und die Stromstärke werden an jeder Elektrode separat gemessen und die ermittelten Werte an den zugehörigen Regler weitergeleitet. Jeder Regler ist wiederum verbunden mit dem dazugehörigen Stellglied (z.B. einem elektronischen Widerstand), der die Strommenge, die der Elektrode zugeführt werden soll, beeinflusst. Damit ist es möglich, die Temperatur jeder einzelnen Elektrode exakt zu regeln.

Erfindungsgemäß ist es aber auch möglich, die Temperatur der einzelnen Elektroden global zu steuern, indem der Strom für das Gesamtarray mittels eines Stellgliedes (z.B. eines elektronischen Widerstandes) eingestellt wird. Dieses ist weniger aufwendig, da es sich um ein Einkanalsystem handelt. In diesem Fall wird auf individuelle Temperaturschwankungen keine Rücksicht genommen. Das Messsignal wird hierbei durch einen zentralen Temperatursensor gewonnen, der mit der Steuereinheit verbunden ist.

In dieser einfachen Anordnung erfolgt eine Vorgabe der individuellen Temperaturen der einzelnen Elektroden dadurch, dass neben der Grundeinstellung und Steuerung des Gesamtarrays durch ein zentrales Stellglied, vor jeder einzelnen Elektrode ein Trimm-Widerstand angeordnet ist.

Auch in diesem Fall wird das Array mit Strom z.B. über einen Transformator versorgt. Durch mindestens einen Temperatursensor, der auf dem Array zwischen den Elektroden angeordnet ist, wird die Temperatur ermittelt und der Temperaturwert an die Steuereinheit geleitet, die mindestens ein Stellglied (z.B. einen elektronischen Widerstand) für das Gesamtheizsystem beeinflusst. Es wird dadurch erreicht, dass eine bestimmte Stromstärke, die für die Heizung der Elektroden erforderlich ist, zentral eingestellt und gesteuert wird.

Über Mehrfach-Doppelschalter, je nach Stellung der Schalter, werden die einzelnen Elektroden mit Strom versorgt oder nicht versorgt.
Dadurch ist es möglich, die Elektroden auf dem Array unterschiedlich zu temperieren, die eingestellten Temperaturen global zu steuern und zeitlich getrennt davon eine Vielzahl von elektrochemischen Messungen vorzunehmen, ohne dass sich bei letzteren die einzelnen Elektroden gegenseitig stören.

Erfolgen elektrisches Heizen und elektrochemisches Messen nacheinander, kann, wie oben beschrieben, mittels Mehrfachdoppelschaltern das Elektrodenarray vom Heizsystem galvanisch abgekoppelt werden. Diese Maßnahme verbietet sich, wenn gleichzeitig gemessen und geheizt werden soll.

Stattdessen muss hier eine galvanische Trennung dadurch erfolgen, dass jede Elektrode mit einem eigenen Übertrager vom Heizsystem getrennt wird. Dies ist bei der globalen Temperatursteuerung einfach zu bewerkstelligen. Bei der individuellen Temperaturregelung ist zusätzlich eine galvanische Trennung auch in den Regelkreisen zwischen den Messgeräten für den elektrischen Widerstand der Elektrode und dem jeweiligen Stellglied (z.B. elektronischer Widerstand) im Heizsystem erforderlich. Dies kann beispielsweise mit Optokopplern geschehen.

Ein Kühlelement mit einer ebenen Unterseite, vorzugsweise bestehend aus Aluminium oder Kupfer, wird über dem Array angeordnet, so dass die Probelösung in einer dünnen Schicht zwischen Array und Kühlelement eingeschlossen wird. Das Kühlelement kann beispielsweise mit einem passiven ausreichend dimensionierten gerippten Kühlkörper verbunden sein. Bei größeren Wärmemengen oder bei Ausgangstemperaturen unterhalb der Raumtemperatur kann auch ein Peltier-Element mit dem Kühlelement verbunden oder mit diesem identisch sein. Die ebene Fläche des Kühlelementes, die in Kontakt mit der Probelösung steht, ist vorteilhafterweise mit einer inerten Gold- oder Platinschicht überzogen. Das Kühlelement kann aufgrund der großen Fläche vorteilhafterweise auch als gemeinsame Gegenelektrode eingesetzt werden.

Weitere Vorteile, Einzelheiten und erfindungswesentliche Merkmale ergeben sich beispielhaft aus den nachfolgenden näheren Erläuterungen der Erfindung anhand der beigefügten Zeichnungen.

Es zeigen:
- Fig. 1a: Array mit 16 Elektroden in der Draufsicht
- Fig. 1b: Array mit Elektroden im Querschnitt
- Fig. 2: Array mit Elektroden in flächenhafter Anordnung
- Fig. 3: Array mit U-förmigen Elektroden, wobei jeweils zwei zu einer symmetrischen Anordnung verbunden sind
- Fig. 4: Array mit 16 Elektroden in der Draufsicht mit Temperatursensor
- Fig. 5: Prinzipielles Blockschaltbild der individuellen Temperaturregelung
- Fig. 6: Schaltung des Arrays für individuelle Temperaturregelung und Kopplung über Mehrfach-Doppelschalter
- Fig. 7: Schaltung des Arrays für individuelle Temperaturregelung und Ankopplung der Elektroden über jeweils eigene Übertrager
- Fig. 8: Prinzipielles Blockschaltbild der globalen Temperatursteuerung
- Fig. 9.: Schaltung des Arrays mit zentraler Temperatursteuerung und Kopplung über Mehrfach-Doppelschalter
- Fig. 10.: Schaltung des Arrays mit zentraler Temperatursteuerung und Ankopplung der Elektroden über jeweils eigene Übertrager
- Fig. 11.: Kühlung der Probelösung auf dem Array mit einem passiven gerippten Kühlkörper
- Fig. 12.: Aktive Kühlung der Probelösung auf dem Array mit einem Peltierelement und einem gerippten Kühlkörper

Nachfolgend sind dieselben Teile mit gleichen Bezugszeichen versehen.

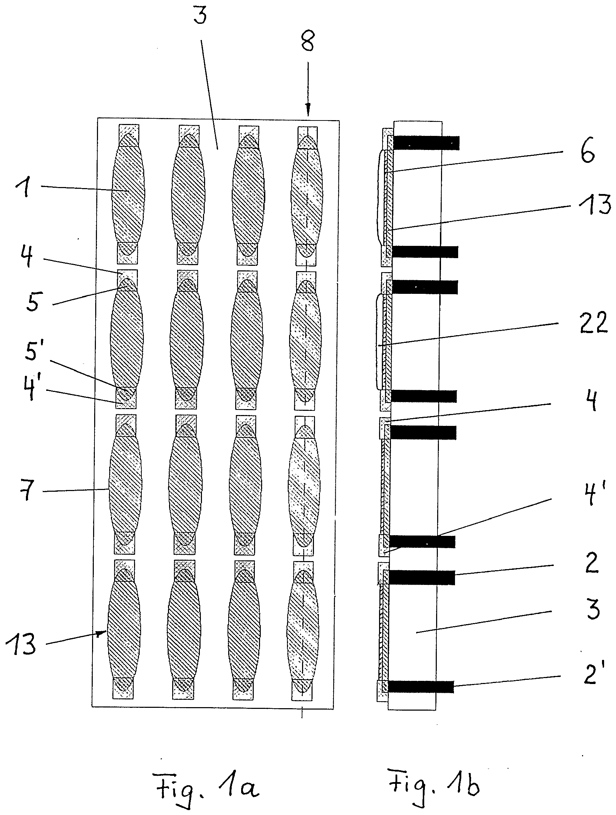

In Figur 1a und 1b ist dargestellt ein Array mit sechzehn Elektroden 13 aus Gold die durch Sputtern auf einem Träger 3 aus Glas aufgebracht sind. Jede Elektrode ist mit einer individuellen Nukleinsäure-SAM bestehend aus HS-modifizierten Sondensträngen, dem Reaktionsmedium 6, modifiziert, die zur Erkennung eines Targetstranges in der Probelösung 22 dient. Der Elektrodenflächenrand 7 ist dabei leicht gekrümmt, so dass die Form der Elektrodenoberfläche 1 eine lang gezogene ovale Geometrie aufweist. Das Verhältnis der größten Breite der Elektrodenoberfläche 1 zur kleinsten Breite unmittelbar an der Deckschicht 4 der Heizstromkontakte 5 beträgt 10 : 7. Die Heizstromkontakte 5,5' an den Enden der Elektrode 13 sind mit den Stromzuführungen 2,2' für die Heizung der Elektrode 13 verbunden, welche, wie aus der Fig.1b ersichtlich ist, von unten durch den Träger 3 herangeführt werden. Die Enden der Elektrode 13 sind mittels einer Deckschicht 4,4' aus Kunststoff zusätzlich abgedeckt. Dadurch sind eine elektrische Isolierung gegen die angrenzende Lösung und ggf. bei größerer Abdeckung der Elektrodenoberfläche 1 auch eine Verringerung des Wärmeverlustes gegeben.

Es ist auch ersichtlich, dass die Breite der Elektrodenoberfläche 1 sich entlang der Längsachse 8 zu den Heizstromkontakten 5,5' verringert, in diesem Fall im Verhältnis von 10 : 7.

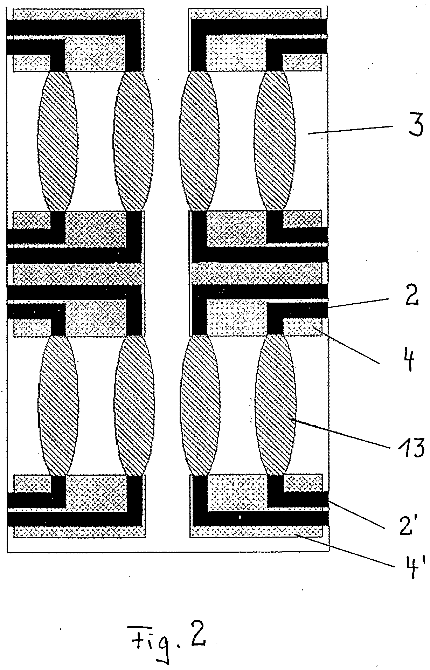

In der Fig. 2 ist eine Array-Anordnung in flächiger Form dargestellt. Die Elektrode 13 ist an den Enden mit den Stromzuführungen 2,2' kontaktiert, die in diesem Fall genauso wie die Elektrode 13 in der horizontalen auf dem Träger 3 angeordnet sind. Die Stromzuführungen 2,2' sind mit einem Isolationsmaterial aus Kunststoff als Deckschicht 4,4' überzogen.

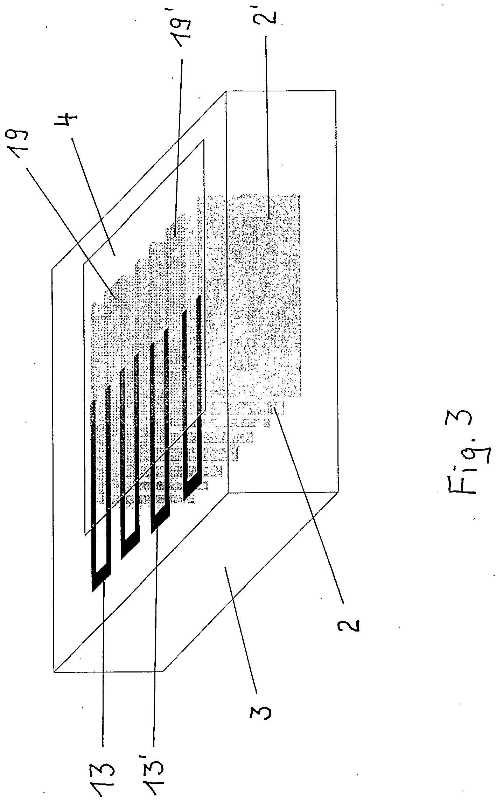

Das erfindungsgemäße Array wird alternativ von einem Paket, wie in der Figur 3 dargestellt, aus senkrecht stehenden Metallblechen als Stromzuführungen 2,2' gebildet. Die Metallbleche sind parallel ausgerichtet und durch isolierende Schichten getrennt. Die oben freiliegenden parallel angeordneten Kanten der Metallbleche (Stromzuführungen 2,2') dienen als Heizstromkontakte 5, 5' für die dünnen heizbaren Elektroden 13,13'.
Diese Anordnung gewährleistet, dass trotz geringer Abmessungen die Querschnittsfläche der Stromzuführungen 2,2' sehr viel größer ist als die Querschnittsfläche der heizbaren Elektroden 13,13'. Die Uniformität der Temperaturverteilung auf der Elektrodenoberfläche 1 der Elektrode 13 und innerhalb der einzelnen Elektrode 13 ist gewährleistet, da ein nicht geringer empirisch im Einzelfall zu ermittelnder Teil der Elektrodenoberfläche 1 in der Nähe der Stromzuführung 2 durch die elektrisch isolierende Deckschicht 4 abgedeckt ist. Die heizbaren Elektroden 13,13' bestehen aus zwei U-förmigen Teilen, die miteinander verbunden sind und eine symmetrische Anordnung ergeben. An den Verbindungsstellen sind die mittleren Kontakte 19,19' zum Anschluss elektrochemischer Instrumente vorgesehen.

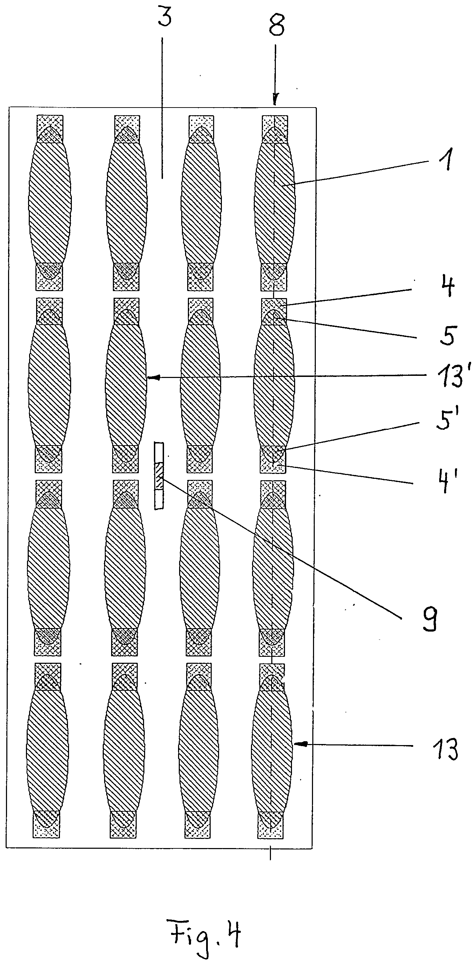

In der Figur 4 ist ein Array dargestellt, ähnlich wie in der Fig. 1. In dieser Anordnung wird jedoch die Temperatur gemessen zwischen den Elektroden 13,13' durch einen Temperatursensor 9, der eine nicht dargestellte Steuereinheit beeinflusst.

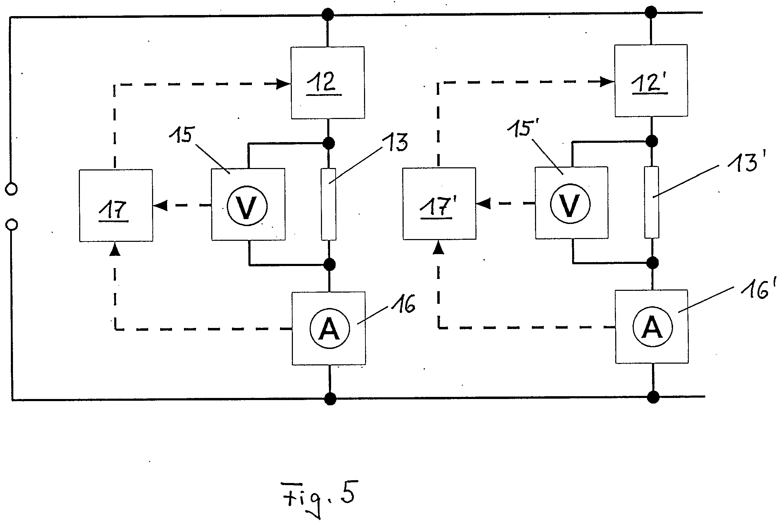

Die Figur 5 zeigt das prinzipielle Blockschaltbild einer individuellen Temperaturregelung der Array-Elektroden, wobei zwei einzelne Regelkreise des Arrays als Ausschnitt dargestellt sind. Der den Elektroden 13, 13' zugeführte Heizstrom wird durch Stellglieder (z.B. elektronische Widerstände 12,12') eingestellt. Die Kontrolle der Stellglieder erfolgt über die Regler 17,17', welche die benötigten Messdaten von den Messgliedern für Strom (Amperemeter 16,16') und Spannung (Voltmeter 15,15') beziehen.

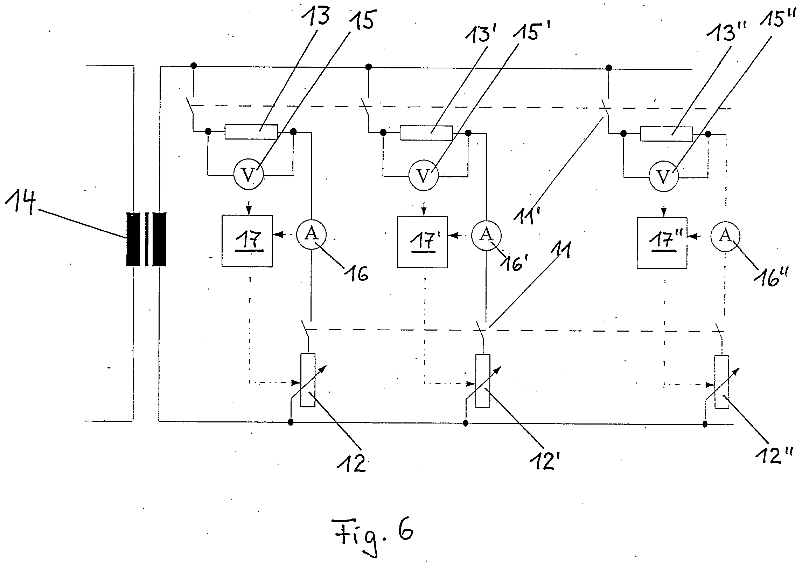

Die Figur 6 zeigt den Schaltplan für die individuelle Regelung der Stromstärke eines erfindungsgemäßen Arrays, bei dem Heizung und elektrochemische Messung nacheinander erfolgen. Die Stromversorgung erfolgt über den dargestellten zentralen Transformator 14. Mehrfachdoppelschalter 11,11' vor und hinter den Elektroden 13,13',13" schalten den Stromfluss durch die Elektroden 13,13',13" für das Erwärmen dieser ein oder aus und gestatten eine galvanische Trennung der Elektroden 13,13',13" voneinander zum Zwecke elektrochemischer Messungen. Gleichzeitig werden über Voltmeter 15,15',15" die anliegenden Spannungen an den Elektroden 13,13',13" und die Stromstärken mittels der Amperemeter 16,16',16" gemessen. Die ermittelten Daten werden an die den Elektroden 13,13',13" zugeordneten Regler 17,17',17" gegeben, die die elektronischen Widerstände 12, 12',12" für den Stromfluss beeinflussen.

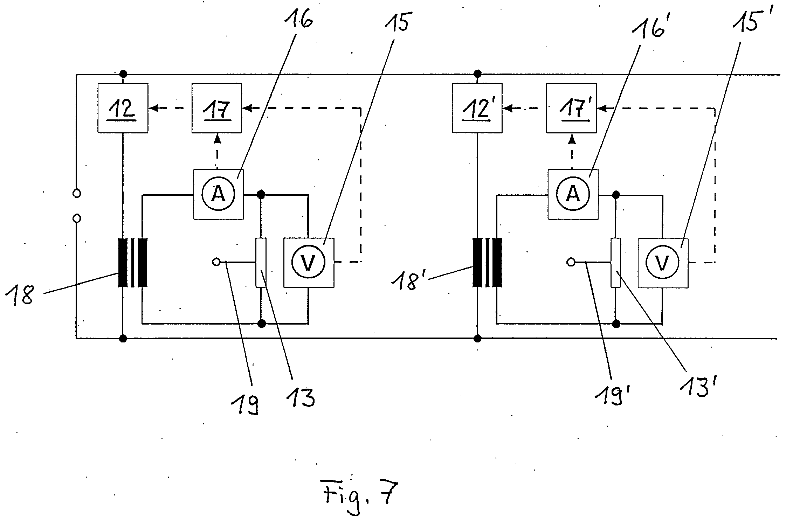

Figur 7 zeigt das Schaltbild für eine individuelle Temperaturregelung, bei der Heizung und elektrochemische Messung simultan erfolgen. In diesem Falle sind die geheizten Elektroden 13,13' zu jedem Zeitpunkt galvanisch voneinander getrennt. Die Ankopplung an die Heizstromversorgung ist mit Hilfe individueller Übertrager 18,18' realisiert.
Zum symmetrischen Anschluss des elektrochemischen Messgerätes an die geheizten Elektroden 13,13' dienen die mittleren Kontakte 19,19'.

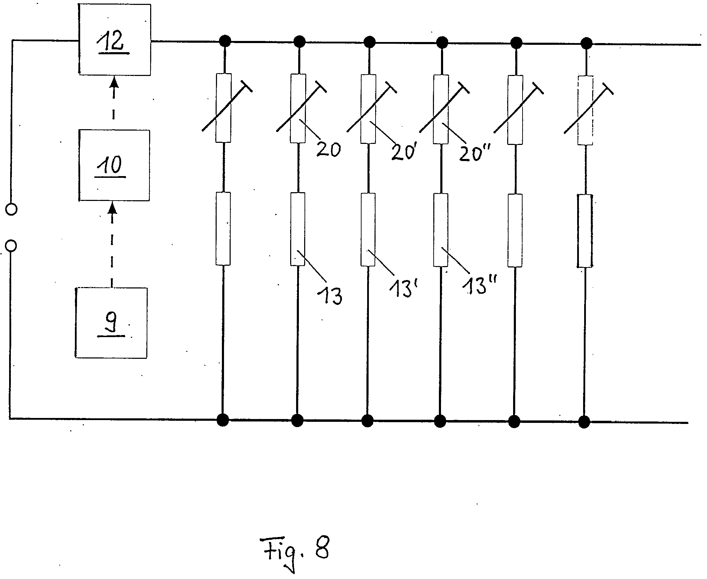

Figur 8 zeigt den prinzipiellen Aufbau einer zentralen Temperatursteuerung aller Elektroden mit einem zentralen Stellglied (z.B. elektronischer Widerstand 12), welches den Heizstrom für alle Elektroden 13,13',13" beeinflusst. Es wird durch die Steuereinheit 10 angesteuert, welche ihre Daten vom Messglied (Temperatursensor 9) bezieht. Eine unterschiedliche Aufheizung wird durch vorgeschaltete Trimm-Widerstände 20, 20', 20" erreicht.

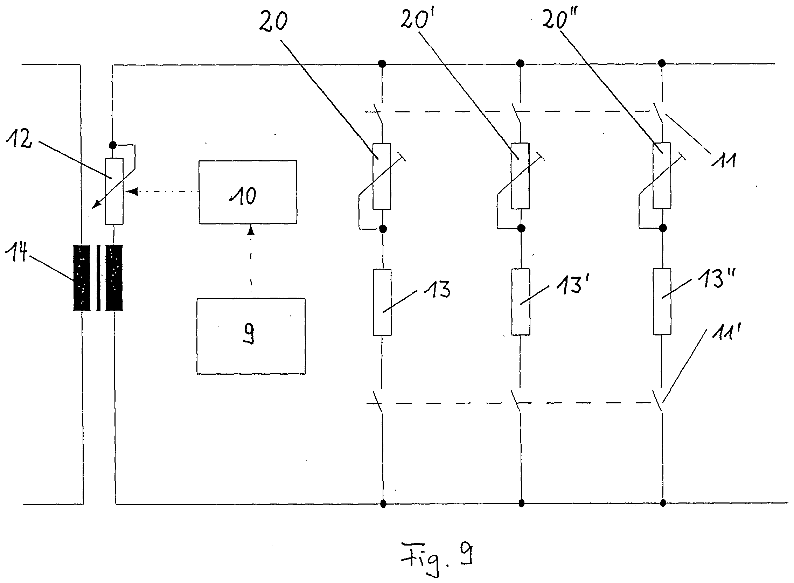

In der Figur 9 ist eine einfache Variante dargestellt, in der simultane Heizung und elektrochemische Messungen nicht vorgesehen sind. Die Stromversorgung erfolgt auch hier über einen zentralen Transformator 14, wobei der Strom, der durch die Elektroden 13,13',13" fließen soll, zentral über den elektronischen Widerstand 12 gesteuert wird. Dieser Widerstand 12 wird gesteuert durch die Steuereinheit 10, die beeinflusst wird von dem Temperatursensor 9, der auf dem Array angeordnet ist, wie aus der Figur 4 ersichtlich. Vor und hinter den Elektroden 13, 13', 13" sind wiederum Mehrfach-Doppel-Schalter 11, 11' angeordnet, welche eine galvanische Trennung der Elektroden voneinander zum Zwecke elektrochemischer Messungen gestatten. Durch TrimmWiderstände 20, 20', 20", die direkt den Elektroden 13, 13', 13" zugeordnet sind, kann eine Differenz der Stromstärke zum Aufheizen zwischen den einzelnen Elektroden 13, 13', 13" eingestellt werden, damit eine unterschiedliche Erwärmung der Elektroden 13, 13', 13" erfolgt.

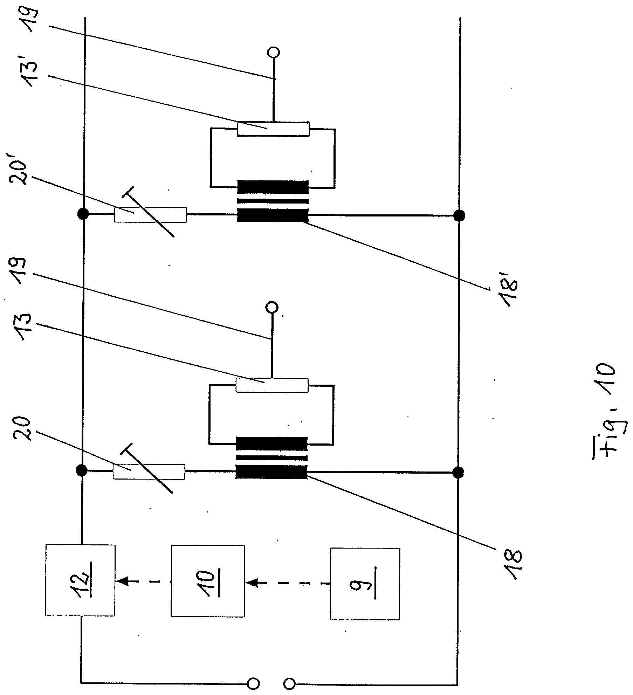

Figur 10 verdeutlicht eine einfache Variante, wie mit Hilfe individueller Übertrager 18, 18' die Elektroden 13, 13' permanent galvanisch voneinander zu trennen sind, so dass Heizung und elektrochemische Messungen simultan möglich sind. Zum symmetrischen Anschluss eines elektrochemischen Messgerätes an die geheizten Elektroden dienen auch hier die mittleren Kontakte 19, 19'.

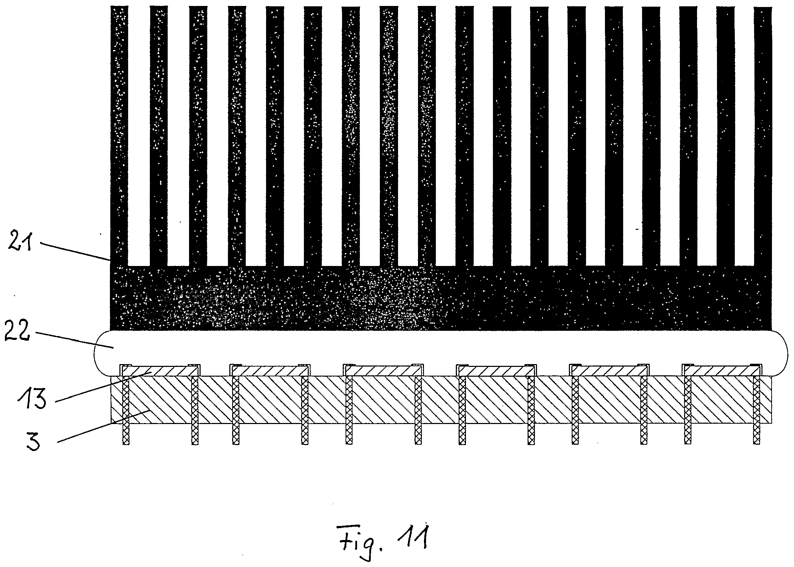

In der Figur 11 ist dargestellt, wie mit Hilfe eines passiven Kühlkörpers 21 die Temperatur der Probelösung 22 konstant gehalten wird. Die Probelösung 22 befindet sich in Form einer dünnen Schicht zwischen dem Elektrodenarray (bestehend aus den Elektroden 13 auf dem Träger 3) und dem Kühlkörper 21.

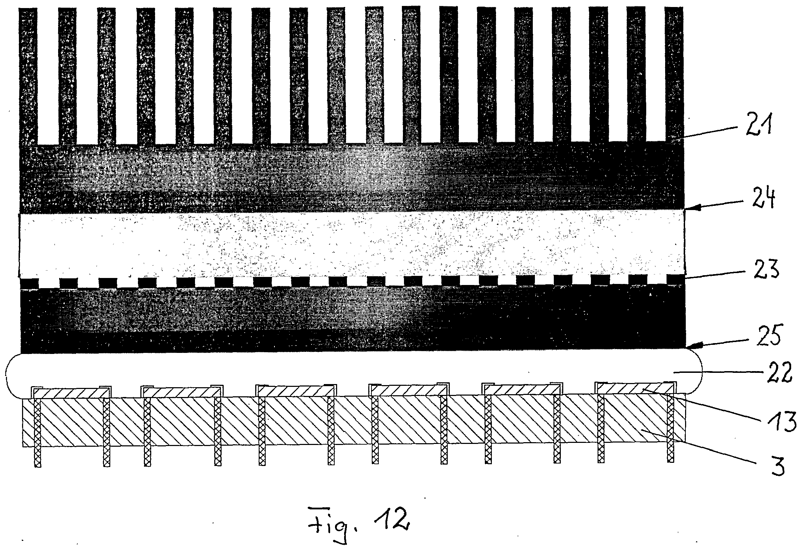

Fig. 12 zeigt eine Variante mit aktiver Kühlung der Probelösung 22. Zwischen Kühlkörpers 21 und der Probelösung 22, die sich auf der Elektrode 13 und dem Träger 3 befindet, ist ein Peltier-Element 23 angeordnet. An der heißen Fläche 24 des Pelttier-Element 23 ist ein Kühlkörper 21 anliegend. Dadurch kann einerseits die Probelösung 22 an der gekühlten kalten Fläche 25 des Peltier-Element 23 diese auf Werte unterhalb der Umgebungstemperatur gekühlt werden und andererseits die Temperatur der Probelösung 22 durch Beeinflussung des Peltierstromes auf einen beliebigen Wert eingestellt werden.
Vorteilhafterweise ist die Unterseite des Kühlkörpers 21 oder des Peltierelements 23, die in Verbindung mit der Probelösung 22 steht, mit Gold oder Platin beschichtet. Diese Gold- oder Platinschicht dient als gemeinsame Gegenelektrode für die Arbeitselektroden des Arrays zum Zwecke elektrochemischer Messungen.

### Beispiel 1

Das Array besteht aus einer Anordnung von schichtförmigen Edelmetallelementen, Elektroden 13, die durch Sputtern oder Aufdampfen auf den Träger 3 aus Glas hergestellt wurde.
Die erfindungsgemäße ovale Form der Elektroden 13 ist in Fig. 1, 2 und 4 dargestellt. Durch diese Form kommt es erfindungsgemäß zu einer flächenmäßig gleichmäßigen Aufheizung der einzelnen Elektroden 13, sobald der Heizstrom zugeschaltet wird. Jede Elektrode 13 besitzt zwei elektrische Heizstromkontakte 5,5' an denen Stromzuführungen 2,2' aus Kupfer mit großer Querschnittsfläche angeschlossen sind und kann elektrisch erwärmt werden. Die Heizstromkontakte 5,5' dienen gleichfalls zum Anschluss elektrochemischer Messinstrumente, beispielsweise Potentiostaten, Galvanostaten, Voltmeter. In der Figur 1b sind Deckschichten 4,4' dargestellt, die die Heizstromkontakte 5, 5' und die elektrischen Stromzuführungen 2, 2' elektrisch isolieren.

### Beispiel 2

Das erfindungsgemäße Array besteht aus einer Anordnung von dünnen Golddrähten mit einem Durchmesser von 25 µm. Es stellt jedes Drahtstück ein heizbares Element des Analyse-Array dar. Es ist an seiner Oberfläche mit einer selbstassemblierten Monolage aus Nukleinsäure-Oligomeren modifiziert. Alle Drahtstücke sind separat ansteuerbar und können daher von jeweils individuell eingestellten Heizströmen durchflossen werden. Die Hybridisierung und ihre Detektierung verlaufen wie im Beispiel 3 angegeben. Eine gleichmäßige Temperatur entlang des Drahtes wird durch eine teilweise Abdeckung mit Isoliermaterial im Bereich der Heizstromkontakte erreicht, deren Abmessungen empirisch zu ermittelten sind.

### Beispiel 3

Oligonukleotide, die 45 Basen enthalten und an einem Ende mit einer HS-(CH)₆- Gruppe modifiziert sind, befinden sich in Form einer selbstassemblierten Monolage auf einer Goldschicht oder einem Golddraht. Diese Oligonukleotide dienen als Sondenmoleküle und treten mit ggf. vorliegenden Analyt- bzw. Targetmolekülen in Verbindung, falls ihre Basensequenzen in hinreichender Weise komplementär zueinander sind. Dadurch kann das Targetmolekül mit einer bestimmten Sicherheit als solches identifiziert werden. Die Goldschicht ist in ihrer Eigenschaft als ohmscher Widerstand Teil eines Heizstromkreises. Diese Goldschicht steht auch mit einem elektrochemischen Messkreis in Verbindung. Erfindungsgemäß befindet sich diese Goldschicht zusammen mit weiteren derartigen Schichten auf einer Glasunterlage, dem Träger, und bildet eine Elektrode eines thermischen Analysearrays. Die Array-Elektroden werden durch Sputtern oder Aufdampfen von Gold auf das Glassubstrat erzeugt. In der Figur 1 ist ein solches Array dargestellt, das sich aus 16 Elementen zusammensetzt. Die Stärke der Bindung zwischen Sonden- und Targetmolekül ist u. a. von der Moleküllänge, dem Gehalt an Guanin-Cytosin-Basenpaarungen sowie dem Grad der Übereinstimmung zwischen Sonden- und Targetsequenz abhängig. Bei hinreichend hoher Temperatur kommt es zur Auftrennung der Bindung. Durch die Wahl der richtigen Temperatur kann nun zwischen Molekülen mit hoher und niedriger Übereinstimmung unterschieden werden. Da jede Array-Elektrode durch eine eigene Basensequenz der auf ihm immobilisierten Sondenmoleküle gekennzeichnet ist, besitzt es auch seine eigene "richtige" Temperatur zur Unterscheidung von voll komplementären und fehlgepaarten Molekülen. Erfindungsgemäß wird dabei die Temperatur für jede Array-Elektrode individuell über den betreffenden Heizstrom eingestellt und alle Elektroden zusammen zentral über einen Temperatursensor gesteuert. Dadurch können äußere thermische Einflüsse wie schwankende Umgebungstemperatur oder unterschiedlich temperierte Probelösungen kompensiert werden.

### Beispiel 4

Eine große Anzahl von Proben wird mit Hilfe der Hybridisierungstechnik analysiert nach bestimmten Nukleinsäuresequenzen. Die Sequenz ist entweder sehr lang, oder die zu bestimmende Anzahl von Sequenzabschnitten sehr groß, so dass der Einsatz eines DNA-Arrays erforderlich ist. Das mit geeigneten Sondenmolekülen bestückte thermische Analyse-Array kann hierbei als Detektor in einer Fließapparatur eingesetzt werden. Jede Einzelprobe wird in einem Zyklus bestehend aus Hybridisierung, elektrochemischer Signaltransduktion und thermischer Regenerierung bestimmt. Bei der Regenerierung werden die Sondenmoleküle thermisch von den Targetmolekülen getrennt durch Erhitzen über die Schmelztemperatur der jeweiligen Nukleinsäuresequenz. Anschließend steht das gleiche Array für die nächste Probe zur Verfügung, wodurch ein großer Probendurchsatz möglich ist. Die Hybridisierung erfolgt bei einer Temperatur, die mit hoher Selektivität nur bei voll komplementären Target-Sequenzen die Bildung der Hybridkomplexe erlaubt.

### Beispiel 5

Ein weiteres Anwendungsbeispiel ist die Analyse von Proteinen. In der Proteom-Analytik stellt sich das Problem, simultan unterschiedliche Proteinspezies charakterisieren zu müssen, da ein Proteom durch den jeweiligen Zustand aller vorhandenen Proteine gekennzeichnet ist und ständiger zeitlicher Veränderung unterliegt.

Proteine können durch Immunoassays bestimmt werden, die auf molekularer Erkennung (Schlüssel-Schloss-Prinzip) beruhen. Dies kann mit Hilfe eines erfindungsgemäßen Analyse-Arrays simultan bei unterschiedlicher auf die jeweilige Spezies abgestimmter Temperatur erfolgen.

### Beispiel 6

Eine wässrige Probe soll auf pH-Wert, Chlorid-, Glucose-, und Bleigehalt untersucht werden. Dieses kann mittels der elektrochemischen Methoden Potentiometrie, Amperometrie und Inversvoltammetrie geschehen. Es wird auch hier ein einfaches selektiv beheiztes Analyse-Array mit vier Reaktionsflächen (Elektroden) eingesetzt, die alle entsprechend modifiziert sind: Es besteht aus zwei ionensensitiven Elektroden für die potentiometrische Bestimmung von pH-Wert bzw. Chlorid-Gehalt bei Raumtemperatur, einer enzymmodifizierten Elektrode für die amperometrische Glucosebestimmung bei 40°C und einer Kohleschichtelektrode für die inversvoltammetrische Bleibestimmung mit einem Anreicherungsschritt bei 80°C

### Beispiel 7

Die Aktivität eines Enzyms soll simultan bei Temperaturen von 0, 10, 20, 30, 40, 50 und 60°C bestimmt werden. Dazu wird ein Analyse-Array verwendet, welches mit einem Peltier-Element zur Kühlung verbunden ist. Die Reaktionsflächen werden mit dem entsprechenden Enzym modifiziert und in eine elektrochemische Zelle gebracht. Mit Hilfe des Peltierelements wird die Ausgangstemperatur des Arrays auf 0°C verringert. Durch selektives Aufheizen werden die einzelnen Reaktionsflächen auf die gewünschten Temperaturen zwischen 0 und 60°C gebracht. Die Aktivität des Enzyms kann nach Zusatz des Substrates amperometrisch auf den einzelnen Array-Elementen verfolgt werden.

Aufstellung der verwendeten Bezugszeichen:
- 1: Elektrodenoberfläche
- 2, 2': Stromzuführung
- 3: Träger
- 4, 4': Deckschicht
- 5, 5': Heizstromkontakt
- 6: Reaktionsmedium
- 7: Reaktionsflächenrand
- 8: Längsachse
- 9: Temperatursensor
- 10: Steuereinheit
- 11, 11': Schalter
- 12, 12', 12": Widerstand
- 13, 13', 13": Elektrode
- 14: Transformator
- 15, 15', 15": Voltmeter
- 16, 16', 16": Amperemeter
- 17, 17', 17": Regler
- 18, 18', 18": Übertrager
- 19, 19', 19": Mittlere Kontakte
- 20, 20', 20": Trimmwiderstände
- 21: Kühlkörper
- 22: Probelösung
- 23: Peltier-Element
- 24: Heiße Fläche des Peltierelementes
- 25: Kalte Fläche des Peltierelementes

## Patentansprüche

1. Analyse-Array mit mindestens einer heizbaren Elektrode (13) auf einem Träger (3), für die chemische oder biochemische Analytik, deren Elektrodenoberfläche (1) auf jeweils eigene Temperatur gebracht wird,
**dadurch gekennzeichnet, dass** mindestens eine lang gestreckte elektrisch leitfähige Elektrode (13) mit Heizstromkontakten (5,5') an jedem Ende der Elektrode (13) und mit Sondenmolekülen auf der Elektrodenoberfläche (1), auf dem Träger (3) aufgebracht ist, wobei
eine gleichmäßige Temperatur auf der ganzen Elektrodenoberfläche (1) gewährleistet wird, indem
die Querschnittsfläche der lang gestreckten Elektrode (13) quer zur Längsachse (8) der Elektrode (13), welche sich erstreckt von einem Ende der lang gestreckten Elektrode mit dem elektrischen Heizstromkontakt (5) zum anderen Ende der lang gestreckten Elektrode mit dem elektrischen Heizstromkontakt (5'), variiert oder
das Ende der Elektrodenoberfläche an den Heizstromkontakten mit einer thermisch und elektrisch isolierenden Deckschicht abgedeckt ist.

2. Analyse-Array nach Anspruch 1,
**dadurch gekennzeichnet, dass** das Verhältnis der Querschnittsfläche der lang gestreckten Elektrode (13) zwischen größter und kleinster Querschnittsfläche variiert vom kleinsten Verhältnis 1 zu 1 bis zum größten Verhältnis 1 zu 3.

3. Analyse-Array nach Anspruch 1,
**dadurch gekennzeichnet,**
**dass** die Anschlüsse für die elektrochemischen Messinstrumente jeweils an den Heizstromkontakten (5, 5') erfolgt

4. Analyse-Array nach Anspruch 1,
**dadurch gekennzeichnet,**
**dass** die einzelnen Elektroden (13) jeweils als elektrisch leitender Draht, als Band oder Easer ausgebildet sind.

5. Analyse-Array nach Anspruch 1,
**dadurch gekennzeichnet,**
**dass** die lang gestreckten Elektroden (13) symmetrisch ausgeführt sind und in der Mitte zusätzlich ein kleinerer Kontakt (19) zwischen den Enden der Heizstromkontakte (5, 5') angeordnet ist zum Anschluss der elektrochemischen Messgeräte.

6. Analyse-Array nach Anspruch 1,
**dadurch gekennzeichnet,**
**dass** die Elektrodenoberfläche (1) der Elektrode (13) als Reaktionsfläche mit Sondenmolekülen belegt ist.

7. Analyse-Array nach Anspruch 1,
**dadurch gekennzeichnet,**
**dass** zwischen den Elektroden (13) auf dem Träger (3) des Arrays mindestens ein Temperatursensor (9) auf der Trägeroberfläche als Messglied für die Temperatursteuerung der Elektroden (13) angeordnet und der Temperatursensor (9) über eine Steuereinheit (10) mit einem elektronischen Widerstand (12) verbunden ist.

8. Analyse-Array nach Anspruch 1,
**dadurch gekennzeichnet,**
**dass** zur individuellen Temperaturregelung der einzelnen Elektroden (13, 13', 13") Regler (17, 17', 17") mit Widerständen (12, 12', 12") für die Heizströme verbunden sind und als Messglieder mit Amperemetern (16, 16', 16") und Voltmetern (15, 15' 15") verbunden sind, zur Messung des Widerstandes jeder einzelnen Elektrode (13).

9. Analyse-Array nach Anspruch 1,
**dadurch gekennzeichnet,**
**dass** die einzelnen Elektroden (13) des Arrays mittelbar oder unmittelbar Kontakt zum jeweiligen Gate eines zugeordneten Feldeffekttransistors haben.

10. Analyse-Array nach Anspruch 1,
**dadurch gekennzeichnet,**
**dass** in den elektrischen Stromzuführungen (2, 2') vor und nach der Elektrode (13) Mehrfachdoppelschalter (11) angeordnet sind.

11. Analyse-Array nach Anspruch 1,
**dadurch gekennzeichnet,**
**dass** die einzelnen Elektroden (13, 13') des Arrays galvanisch voneinander getrennt sind und für die Zufuhr des Heizstromes individuelle Übertrager (18, 18') angeordnet sind.

12. Analyse-Array nach Anspruch 1,
**dadurch gekennzeichnet,**
**dass** das Array zur Kühlung der Probelösung (22) mit mindestens einem Peltier-Element (23) oder einem passiven Kühlkörper (21) verbunden ist.

## Claims

1. Analysing array with at least one heatable electrode (13) on the support for the chemical or biochemical analysis, the electrode surface (1) of which is brought to a respective own temperature, **wherein**
at least one elongated electrically conductive electrode (13) with heating current contacts (5, 5') at each end of the electrode (13) and with molecule sonde on the electrode surface (1), is applied on the carried(3),
where a uniform temperature on the whole electrode surface (1) is provided,
by the cross-section area the elongated electrode (13) is cross to the longitudinal axis (8) of the electrodes (13), which stretched of one end the elongated electrode with the electrically heating current contact (5) to the other end the elongated electrode with the electrically heating current contacts (5), varies or
the end the electrode surface on the heating current contacts with a thermically and electrically insulating layer is covered.

2. Analysing array according to claim 1, **wherein**
the ratio of the cross-section areas of the elongated electrode (13) between biggest and smallest cross-section areas varied from smallest proportional 1 : 1 to greatest proportional 1 : 3.

3. Analysing array according to claim 1, wherein
the coupling for the electrochemical measurements is realised of the heating current contacts (5, 5').

4. Analysing array according to claims 1, **wherein**
the single electrodes (13) respectively are realised as electrically conductive wire, strip or fibre.

5. Analysing array according to claim 1, **wherein**
the elongated electrodes (13) are realised symmetrically and centrally is placed additional a smaller contact (19) between the ends the heating current contacts (5, 5') for coupling the electrochemical measuring instrument.

6. Analysing array according to claim 1, **wherein**
the electrode surface (1) of the electrode (13) modified as reaction surface is realised with sonde molecules.

7. Analysing array according to claim 1, **wherein**
that between the electrodes (13) on the carrier (3) on array is placed at least one temperature sensor (9) on the support surface as measuring unit for the temperature controls the electrodes (13) and the temperature sensor (9) is connected via the control elements (10) with a electrical resistor (12).

8. Analysing array according to claim 1, **wherein**
for individual temperature control of the single electrodes (13, 13', 13") controllers (17, 17', 17") via the resistors (12, 12', 12") for the heating currents connected and are coupled as control element with ammeters (16, 16', 16") and voltmeters (15, 15',15") for measuring the resistance of each electrode (13).

9. Analysing array according to claim 1, **wherein**
the single electrodes (13) of the array have an indirect or direct contact to the respective gate of an allocated field-effect transistor.

10. Analysing array according to claim 1, **wherein**
the electrical current supply leads (2, 2') before and after the electrode (13) are placed multible double circuit breakers (11).

11. Analysing array according to claim 1, **wherein**
the single electrodes (13, 13') of the array are electrically separated from each other and the supply of the heating current is realised via individual transducers (18, 18').

12. Analysing array according to claim 1, **wherein**
the array for cooling the sample solution (22) is connected to at least one Peltier element (23) or one passive heat sink (21).

## Revendications

1. Analyse du circuit prétraité avec au moins une électrode chauffante (13) sur un support pour l'analyse chimique ou biochimique dont la surface d'électrode (1) est respectivement amenée à leur propre température **caractérisée en ce**
**qu'**au moins une électrode conductrice électriquement allongée (13) avec les contacts de courant de chauffage (5,5') à chaque extrémité de l'électrode (13) et avec des molécules de sondes sur la surface de l'électrode (1) sur lesquels le support (3) est appliqué, d'où une uniforme température est assurée sur toute la surface de l'électrode (1) en variant la surface de section transversale de la ligne médiane de l'électrode transversale allongée (13) à l'axe longitudinal (8) de l'électrode, (13) qui s'étend d'une extrémité de l'électrode allongée du contacts de courant de chauffage (5) à l'autre extrémité de l'électrode allongée avec les contacts de courant de chauffage électrique (5 '), ou l'extrémité de la surface d'électrode sur les contacts de courant de chauffage avec un revêtement thermique et électrique isolant, est recouverte.

2. Analyse du circuit prétraité selon la revendication 1, **caractérisée en ce**
**que** le rapport de la surface en coupe transversale de l'électrode allongée (13) entre la zone la plus grande et la plus petite section transversale varie de la plus petite proportion de 1:1 jusqu'au plus grand rapport de 1:3.

3. Analyse du circuit prétraité selon la revendication 1, **caractérisée en ce**
**que** les connexions pour les appareils de mésure électrochimique sont respectivement réalisées sur les contacts de courant de chauffage (5, 5')

4. Analyse du circuit prétraité selon la revendication 1, **caractérisée en ce**
**que** les électrodes individuelles (13) soient respectivement formées sous la forme d'un fil conducteur de l'électricité, d'une bande ou d'une fibre.

5. Analyse du circuit prétraité selon la revendication 1, **caractérisée en ce**
**que** les électrodes allongées (13) sont symétriquement exécutées, et un contact inférieur (19) entre les extrémités de contacts de courant de chauffage (5, 5') est positionné en plus au milieu, pour connecter les dispositifs de mésure électrochimiques.

6. Analyse du circuit prétraité selon la revendication 1, **caractérisée en ce**
**que** la surface d'électrode (1) de l'électrode (13) est recouverte comme surface de réaction avec les molécules sondes.

7. Analyse du circuit prétraité selon la revendication 1, **caractérisée en ce**
**qu'**entre les électrodes (13) sur le support (3) du circuit prétraité au moins un capteur de température (9) est positionné sur la surface de support comme élément de mésure pour le contrôle de la température de l'électrode (13), et le capteur de température (9) par l'intermédiaire d'une unité de commande (10) est relié à une résistance électronique (12).

8. Analyse du circuit prétraité selon la revendication 1, **caractérisée en ce**
**que** pour la régulation individuelle de la température, dans chaque cas, les régulateurs d'électrodes sont reliés (13, 13', 13'') règulateur(17, 17', 17'') avec les résistances (12, 12', 12"), et ceux-ci soient reliés comme éléments de mésure avec ampèremètres (16, 16', 16") et voltmètres (15, 15' 15") pour mésurer la résistance de chaque électrode individuelle (13).

9. Analyse du circuit prétraité selon la revendication 1, **caractérisée en ce**
**que** les électrodes individuelles (13) du circuit prétraité ont un contact direct ou indirect avec la grille respective d'un transistor à effet de champ attribué.

10. Analyse du circuit prétraité selon la revendication 1, **caractérisée en ce**
**que** les conducteurs électriques d'alimentation (2, 2') avant et après l'électrode (13) à double commutateur multiple (11) soient agencés.

11. Analyse du circuit prétraité selon la revendication 1, **caractérisée en ce**
**que** les électrodes individuelles (13, 13 ') du circuit prétraité sont isolées les unes des autres de façon galvanique, et qu'elles soient agencées pour l'alimentation du transformateur du courant de chauffage (18, 18')

12. Analyse du circuit prétraité selon la revendication 1, **caractérisée en ce**
**que** le circuit prétraité pour refroidir la solution d'échantillon est connecté (22) avec au moins un élément Peltier (23) ou un radiateur passif (21).
